## Europäisches Patentamt
## European Patent Office
## Office européen des brevets

(19)

(11) Numéro de publication: **0 190 522**
**B1**

(12) **FASCICULE DE BREVET EUROPEEN**

(45) Date de publication du fascicule du brevet:
**17.11.88**

(51) Int. Cl.⁴: **B 29 C 47/28**, B 29 C 47/86,
B 29 C 47/02

(21) Numéro de dépôt: **85402482.5**

(22) Date de dépôt: **12.12.85**

(54) **Matériau composite constitué d'une gaine thermoplastique continue et d'une âme sensible à la température de fusion de la gaine, son procédé de fabrication.**

(30) Priorité: **18.12.84 FR 8419367**

(43) Date de publication de la demande:
**13.08.86 Bulletin 86/33**

(45) Mention de la délivrance du brevet:
**17.11.88 Bulletin 88/46**

(84) Etats contractants désignés:
**AT BE CH DE FR GB IT LI LU NL SE**

(56) Documents cités:
**DE - A - 1 527 779**
**FR - A - 2 021 601**
**GB - A - 1 079 551**
**US - A - 3 239 884**
**US - A - 3 773 449**

(73) Titulaire: **ATOCHEM, 4 & 8, Cours Michelet La Défense 10, F-92800 Puteaux (FR)**

(72) Inventeur: **Bourdon, Raymond, Domaine du Château Lafitte, F-64360 Monelm (FR)**
Inventeur: **Kunesch, Paul, Quartier Loupien, F-64360 Monelm (FR)**
Inventeur: **Cazes, André, 7 Avenue du Général de Gaulle Résidence de France, Pavillon Provence F-64000 Pau (FR)**

(74) Mandataire: **Foiret, Claude et al, ATOCHEM Département Propriété Industrielle, F-92091 Paris la Défense 10 Cédex 42 (FR)**

## Description

La présente invention concerne un matériau composite constitué d'une gaine thermoplastique continue et d'une âme selon le préambule de la revendication 1, aussi qu'un procédé de fabrication de ce matériau selon le préambule de la revendication du procédé 3.

Les matériaux composites constitués d'une âme gainée de matière thermoplastique sont connus, il s'agit de façon générale de matériaux possédant des âmes métalliques, comme dans le cas par exemple des câbles ou fils électriques. Les techniques adaptées à ces fabrications, telle celle décrite dans le brevet US-A-3 764 642, ne permettent de fabriquer que des matériaux composites dont l'âme est peu sensible non seulement à la température de fusion du matériau constituant la gaine, mais encore à celle de l'outillage d'extrusion. Tel est également le cas du FR-A-2 021 601 qui décrit un outillage permettant de gainer un matériau thermoplastique de grande longueur possédant un point de fusion supérieur à celui de la gaine (page 8, lignes 28 à 30) donc peu fragile à la température d'extrusion de ladite gaine. Habituellement ces composites sont fabriqués par extrusion en faisant passer le fil surtout métallique à travers la filière de gainage. Il est donc tout à fait impensable, avec une telle technique, de fabriquer un composite dont l'âme ne peut supporter la température d'extrusion de la gaine.

Selon le brevet EP-A-0 133 825 il n'est possible d'obtenir qu'un matériau composite dont la température de fusion de l'âme est au mieux égale à celle de la gaine, c'est-à-dire un matériau possédant une âme non sensible à la température de gainage dans les conditions opératoires connues.

Dans le brevet US-A-3 773 449 est décrit un composite formé d'une gaine et d'une âme constituée de fibres sensibles à la température d'extrusion de la gaine. Selon ce brevet le gainage est effectué par extrusion de la gaine sur les fibres. Pour conserver les propriétés des fibres ces dernières passent jusqu'à la filière d'extrusion dans un guide soumis à un vide qui assure d'une part le refroidissement du guide et d'autre part un bon contact entre les fibres et la gaine. Un tel système ne peut être envisageable pour le gainage d'une âme constituée au moins partiellement de poudre thermiquement fragile, le vide dans le guide entrainant fatalement un colmatage et un blocage du processus d'extrusion.

Dans le brevet US-A-3 239 884, ayant servi de bas pour le préambule des revendications indépendantes 1 et 3, est décrit un outillage permettant de gainer un câble sensible aux effets thermiques. L'appareillage permettant de gainer le câble est constitué d'une part d'un outillage représenté par une filière tubulaire et un poinçon et d'autre part d'un guide tubulaire du câble. Ce guide, muni d'un dispositif de refroidissement interne, est disposé dans l'axe de la lèvre de sortie de l'outillage formant la paroi interne de la gaine, tout en conservant un canal permettant la circulation d'air comprimé ou de provoquer une dépression entre le câble, le guide et la gaine, la jonction entre le câble et la gaine assurant l'étanchéité et la continuité entre la tubulure du guide et le canal.

Selon cet appareillage, si un flux d'air est utilisé comme moyen de refroidissement, il vient directement en contact à la jonction du câble et de la gaine. L'arrivée directe du flux de refroidissement n'est pas gênant, lorsqu'il s'agit d'un câble unique à gainer, il suffit de le régler de façon adéquate pour ne pas perturber le gainage.

Il en va tout autrement lorsqu'il s'agit de gainer une âme constituée au moins partiellement de poudre particulièrement fragile soit thermiquement soit mécaniquement. Dans le cas de l'appareillage selon ce brevet US-A-3 239 844 le réglage du débit d'air ne peut être assuré pour le gainage de mèches de fibres imprégnées de poudre fragile ce qui entraine des anomalies dans la formation de la gaine avant rupture. Il en est de même dans le cas du gainage des poudres qui se trouvent refoulées soit dans le guide, soit dans le canal d'évacuation de l'air selon le sens du flux d'air, ce qui conduit fatalement à des bourrages à un endroit quelconque de l'appareillage entrainant au mieux la rupture du matériau extrudé et au pire la décomposition des matériaux par bouchage des filières.

Selon la présente invention il est maintenant possible de fabriquer un matériau composite dont l'âme est sensible, selon la définition donnée, dans les conditions de température de gainage, comme il est décrit dans les revendications indépendantes 1 et 3.

Le matériau composite selon l'invention est essentiellement constitué d'une gaine thermoplastique et d'une âme sous forme, au moins partiellement, de poudre. Toutes les résines, thermoplastiques après leur extrusion, peuvent convenir comme gaine. Elles peuvent par exemple être choisies dans le groupe des polymères ou copolymères styréniques, vinyliques, acryliques ou méthacryliques, oléfiniques, ou encore parmi les résines fluorées, les polyamides, les polycarbonates, les propionates de cellulose et les mélanges de ces composés. On entend également par résine thermoplastique, les résines extrudables, thermoplastiques après extrusion, susceptibles d'être ultérieurement réticulées; tel est le cas par exemple des caoutchoucs synthétiques o élastomères, tels par exemple l'EPDM ou les polyéthylènes chlorosulfonés, ou encore des polyesters comme par exemple certains polyuréthannes.

L'âme du matériau composite peut se présenter sous forme de poudre. Elle peut également se présenter sous forme de fibres quelconques imprégnées de poudre sensible à la température de fusion de la gaine. De telles poudres sont habituellement des poudres de résine thermoplastique, mais il n'est pas exclu d'imprégner les fibres d'un réactif tel qu'accélérateur ou agent réticulant susceptible de réagir ultérieurement à chaud avec la gaine. De façon générale l'âme est constituée de poudre associée ou non à des fibres susceptibles d'avoir leur aspect physique ou leur structure endommagé aux températures d'extrusion de la gaine. La poudre utilisée dans l'âme du matériau est habituellement choisie parmi les composés dont le point de fusion ou à défaut la température de décomposition est inférieur au point de fusion du matériau thermoplastique choisi pour la gaine.

Un matériau particulièrement intéressant selon l'invention est constitué d'une gaine thermoplastique contenant une âme comprenant des fibres, par exemple de textile, de carbone ou de verre, imprégnées d'une poudre sensible à la température de fusion de la gaine.

L'imprégnation, préalable au gainage, des fibres par une poudre est connue et peut se faire, selon un procédé classique, par passage des fibres dans un lit fluidisé de poudre comme décrit dans le brevet EP-A-0 133 825.

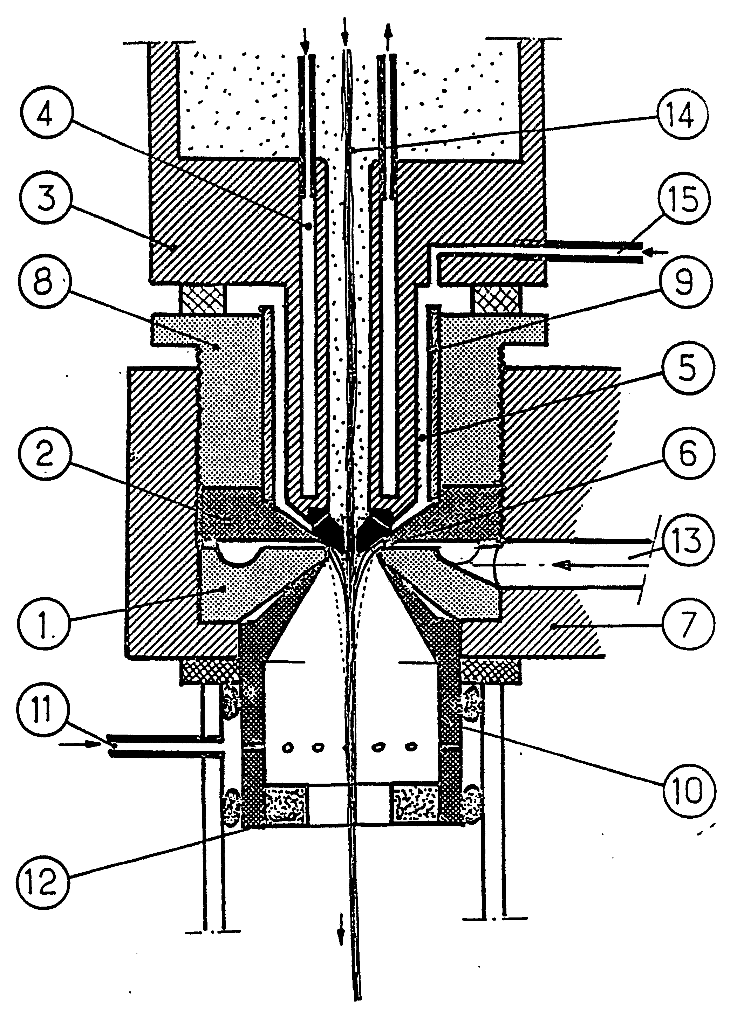

Le matériau composite de l'invention est fabriqué selon la technique classique de gainage par extrusion, la différence avec l'art antérieur se situant au niveau d'une tête d'extrusion spécifique. Les explications suivantes, illustrées par la figure annexée, permettent de mieux comprende le procédé après description de l'appareillage.

L'appareillage est essentiellement constitué d'un outillage représenté par une filière tubulaire (1) et un poinçon (2), et d'un guide tubulaire (3) de l'âme. Ce guide, maintenu éventuellement refroidi au moyen du système (4), est disposé de telle sorte que son extrémité de sortie aboutisse sensiblement dans l'alignement, et de préférence sensiblement dans l'axe, de la lèvre de sortie de l'outillage formant la paroi interne de la gaine, c'est-à-dire sensiblement dans l'alignement du poinçon (2), tout en conservant un canal (5) pour un moyen de refroidissement pouvant aller jusqu'au canal (6) de sortie de la matière de l'outillage.

L'originalité de ce guide est d'être terminé en sortie d'une buse percée de trous latéraux. En outre, le canal de sortie de la buse, de préférence dans l'axe de celui du guide, est d'un diamètre, tout en restant supérieur à celui de l'âme traversant le guide, inférieur au diamètre interne du reste du guide (3). L'intérêt de cette buse, représentée sur la figure en noir en tête du guide (3), est de maitriser le moyen de refroidissement, en général un courant d'air, arrivant par le canal (5). Ce moyen de refroidissement, partiellement ou totalement détourné par les trous latéraux de la buse, arrive avec moins de vigueur sur le matériau (14) constituant l'âme et sur la gaine formée dans le canal (6). Un tel agencement est particulièrement intéressant lorsque l'âme est constituée plus ou moins partiellement de poudre. En déplaçant le guide de façon à ce que l'extrémité de la buse vienne en contact avec le poinçon (2), il est possible d'obturer totalement, comme représenté sur la figure, le canal (5) avant la sortie de l'outillage formant la paroi interne de la gaine. Dans ce cas d'obturation totale le fluide de refroidissement, détourné par les trous latéraux de la buse, est renvoyé à l'intérieur du guide sans entrer directement en contact avec la gaine. Le nombre de trous latéraux est au moins au nombre de deux disposés en opposition; toutefois pour la bonne marche de l'appareillage il est préférable de disposer une couronne de trous autour de la buse.

De façon classique et accessoire l'outillage représentant l'ensemble filière-poinçon est habituellement monté en tête d'équerre (7) l'ensemble étant fixé par un écrou de serrage (8). Afin d'améliorer l'isolation thermique du guide, il n'est pas exclu de revêtir les parois chaudes du passage (5) d'un isolant (9) servant d'écran thermique supplémentaire.

Afin de diminuer au maximum l'effet dû au rayonnement calorifique de l'outillage d'extrusion, il est recommandé de disposer directement en sortie d'outillage un écran thermique (10), les meilleurs résultats étant obtenus avec un écran prenant naissance au niveau de la lèvre externe de l'outillage. L'efficacité de l'écran peut être améliorée par tout moyen de refroidissement annexe tel, par exemple, l'envoi d'un courant d'air par la tubulure (11), courant d'air pouvant accessoirement servir pour maintenir une contrepression sur le matériau extrudé grâce à un réducteur de débit d'air (12). L'ensemble de l'appareillage s'adapte à une extrudeuse classique et s'utilise selon les techniques classiques d'extrusion.

L'extrémité du guide tubulaire (3), c'est-à-dire l'extrémité de sortie de la buse, sensiblement dans l'alignement de la lèvre de sortie de l'outillage formant la paroi interne de la gaine, peut se trouver en deçà de ladite lèvre, mais elle peut également déboucher au delà de la lèvre de sortie de la filière, comme montré sur la figure. De préférence la distance de l'extrémité de la sortie de la buse à la lèvre du poinçon quand le guide est en retrait, ou, de l'extrémité de sortie de la buse à la lèvre de sortie de la filière quand le guide dépasse à l'extérieur de la filière est de l'ordre de 4 mm au maximum.

Au moyen de l'appareillage il est possible de fabriquer, comme déjà précisé, un matériau composite constitué d'une gaine plastique contenant une âme, au moins partiellement sous forme de poudre, fragile à la température d'extrusion de la gaine. Selon le procédé on extrude une gaine thermoplastique au travers du canal (13) de la filière, tandis que simultanément par l'extrémité opposée à l'outillage du guide (3), éventuellement refroidi et servant d'entonnoir, on introduit le matériau (14) constituant l'âme qui rencontre la gaine après la sortie de l'outillage, un système de refroidissement étant établi sensiblement au niveau de la sortie de l'outillage entre la partie interne de la gaine et le matériau constituant l'âme de telle sorte que l'âme ne puisse être attaquée par la température de l'outillage ou celle de la gaine en sortie (6). Un système de refroidissement pratique, bien que non exhaustif, consiste à injecter de l'air froid en (15) dans le canal (5) entre le guide (3) et la paroi chaude de l'outillage. En conséquence soit de l'avancement du guide dans la sortie de l'outillage, soit du degré de refroidissement de la sortie interne de la gaine, ou encore de la conjonction des deux moyens, il est possible de maintenir l'ensemble du matériau à gainer à une température suffisamment basse pour qu'il conserve durant toute l'opération de gainage son aspect pratiquement original sans déformation sensible.

Afin d'améliorer le calibrage du matériau composite ou même d'augmenter sa vitesse de refroidissement il est possible d'envoyer un contre courant d'air sur la gaine externe en sortie d'outillage. Cela peut par exemple se faire en injectant de l'air dans la tubulure (11) de l'écran thermique (10).

Le matériau selon l'invention trouve de nombreuses applications en particulier dans le renforcement de pièces soit par exemple par enroulement et chauffage du matériau sur la pièce pour souder l'ensemble ou encore par dépôt et chauffage d'un tissu ou d'un mat constitué par le matériau composite.

Les exemples suivant illustrent l'invention sans la limiter.

Exemple 1

A partir d'une extrudeuse type monovis de diamètre 30–24 D, munie de l'outillage de la figure annexée, on extrude à un débit de 760 grammes/heure, à une température d'extrusion à l'outillage de 220 °C, une gaine de polyamide 6 de diamètre 2 mm, simultanément on introduit dans la gaine à travers le guide (3) refroidi à l'eau, un rowing 320 tex dont les fils sont préalablement noyés dans une poudre de polyamide 12 de température de fusion de 176 °C, dont la taille des particules est de l'ordre de 10 microns.

Le rapport en volume fibre/poudre étant de 25/75. Dans le canal (5) on fait circuler un débit d'air suffisant pour obtenir une fluidisation de la poudre à proximité de la zone de gainage.

Exemple 2

Dans l'appareillage de l'exemple 1 on extrude à un débit de 860 grammes/heure à une température d'extrusion à l'outillage de 225 °C une gaine polyamide 6 de diamètre 2 mm, simultanément on introduit dans la gaine à travers le guide 3 refroidi à l'eau un agent d'expansion en poudre: l'azodicarbonamide dont la température de décomposition est de 150°C, imprégné sur un rowing 320 tex. Le rapport en volume fibre-poudre est de 46/54.

On obtient un composite polyamide 6-azodicarbonamide renforcé de fibres susceptibles d'être traité ultérieurement à chaud pour utiliser les effets d'expansion de l'azodicarbonamide.

Exemple 3

On reprend l'exemple 1 avec:
une température d'outillage de 225 °C
une gaine de polyéthylène de point de fusion 117°C
un débit d'extrusion de 1025 grammes/heure

On introduit dans la gaine, simultanément à sa formation, le rowing imprégné de peroxyde de dicumyle en poudre dont la température de réaction est de 120°C. Le rapport en volume fibre-poudre est de 35/65.

On obtient un composite susceptible d'être réticulé ultérieurement à chaud.

Exemple 4

On reprend l'exemple 1 avec:
une température d'outillage de 210 °C
une gaine de polyamide 12
un débit d'extrusion de 800 grammes/heure

On introduit dans la gaine, simultanément à sa formation, le rowing imprégné de polyether bloc amide en poudre de point de fusion de 128 °C. Le rapport en volume fibre-poudre est de 43/57.

On obtient un composite susceptible d'être traité à chaud afin d'améliorer la souplesse finale du polyamide 12 grâce au polyether compatible.

**Revendications**

1. Matériau composite constitué d'une gaine thermoplastique continue et d'une âme choisie parmi les composés dont le point de fusion ou à défaut la température de décomposition est inférieure à la température de fusion de la gaine, caractérisé en ce que l'âme se trouve au moins partiellement sous forme de poudre.

2. Matériau selon la revendication 1, caractérisé en ce que l'âme est constituée de fibres imprégnées de poudre.

3. Procédé de fabrication du matériau d'une des revendications 1 ou 2 consistant à extruder une gaine au travers d'un outillage représenté par une filière tubulaire (1) et un poinçon (2), ledit outillage étant monté en tête d'equerre de façon à ce que, par l'intermédiaire d'un guide (3) ou introduise l'âme dans la gaine simultanément à sa fabrication et à sa température d'extrusion, tout en assurant, grâce à un moyen situé dans le canal (5) entre l'outillage et le guide (3) un refroidissement, régulé par une buse percée de trous latéraux formant l'extrémité du guide, sensiblement au niveau de la sortie de l'outillage entre la partie interne de la gaine et le matériau constituant l'âme, caractérisé en ce que pour conserver les caractéristiques de l'âme sensible à la température d'extrusion de la gaine la distance de l'extrémité de sortie de la buse du guide (3) à la lèvre du poinçon (2) quand le guide est en retrait, ou, de l'extrémité de sortie de la buse à la lèvre de sortie de la filière (1) quand le guide dépasse à l'extérieur de la filière est d'environ 4 mm maximum.

**Patentansprüche**

1. Verbundwerkstoff, bestehend aus einer endlosen thermoplastischen Hülle und einer Seele aus einer Verbindung, deren Schmelzpunkt oder bei dessen Fehlen deren Zersetzungstemperatur niedriger ist als der Schmelzpunkt der Hülle, dadurch gekennzeichnet, dass die Seele mindestens teilweise als Pulver vorliegt.

2. Werkstoff nach Patentanspruch 1, dadurch gekennzeichnet, dass die Seele aus mit Pulver imprägnierten Fasern besteht.

3. Verfahren zur Herstellung des Werkstoffes eines der Patentansprüche 1 oder 2, darin bestehend, dass eine Hülle durch ein Werkzeug extrudiert wird, das aus einer Rohrdüse (1) und einem Durchschlag (2) besteht und als Querspritzkopf so montiert ist, dass mittels einer Führung (3) die Seele gleichzeitig mit der Herstellung der Hülle und bei deren Extrusionstemperatur in die Hülle eingebracht wird, wobei durch ein sich im Kanal (5) zwischen dem Werkzeug und der Führung (3) befindendes Mittel eine durch eine seitlich durchlöcherte Düse, die die Spitze der Führung bildet, regulierte Abkühlung fast auf der Höhe des Austritts des Werkzeugs zwischen dem Inneren der Hülle und dem die Seele bildenden Material sichergestellt wird, dadurch gekennzeichnet, dass zur Erhaltung der Eigenschaften der gegen die Extrusionstemperatur der Hülle empfindlichen Seele der Abstand zwischen dem Austrittsende der Düse der Führung (3) und der Lippe des Durchschlags (62) bei zurückgezogener Führung oder zwischen dem Austrittsende der Düse und der Austrittslippe der Rohrdüse (1), wenn die Führung ins Äussere der Rohrdüse vorsteht, maximal ungefähr 4 mm beträgt.

**Claims**

1. A composite material constituted by a continuous thermoplastic sheath and a core chosen from compounds of which the melting point, or in default of this the decomposition temperature, is below the melting point of the sheath, characterized in that the core it at least partially in the form of a powder.

2. Material according to claim 1, characterized in that the core consists of fibres impregnated with powder.

3. A process for manufacturing the material of one of claims 1 or 2 which consists of extruding a sheath through a tool consisting of an extrusion plate (1) and a die (2), the said tool being mounted in a right-angled extruder head in such a way that, by means of a guide (3), the core is introduced into the sheath simultaneously with its formation and at its extrusion temperature, whilst ensuring cooling by use of a medium inside the channel (5) between the tool and the guide (3), regulated by a nozzle pierced by lateral holes which forms the end of the guide, substantially at the level of the outlet from the tool, between the internal part of the sheath and the material constituting the core, characterized in that for preserving the characteristics of the core which is affected by the extrusion temperature, the distance from the outlet end of the nozzle of the guide (3) to the mouth of the die (2) when the guide is recessed, or, from outlet end of the nozzle to the outlet mouth of the extrusion plate (1) when the guide extends beyond the extrusion plate, is about 4 mm maximum.

0190522

7